# EUROPEAN PATENT APPLICATION

(11) **EP 2 815 646 A1**
(43) Date of publication of application: **24.12.2014**
(21) Application number: 14382217.9
(22) Date of filing: 11.06.2014
(51) Int. Cl.: A01N 25/00, A01M 1/20, A01M 3/00

(54) **Method for treating plants against plagues**

(30) Priority: 18.06.2013 ES 201330910
(71) Applicant: Escudero Archilla, Gabriel, 07184 Calvia (ES)
(72) Inventor: Escudero Archilla, Gabriel, 07184 Calvia (ES)
(74) Representative: Gallego Jiménez, José Fernando

(57) **Abstract**

This method comprises: - wrapping a treatment area of the plant with an impermeable tubular sheet (2), fixing the tubular sheet (2) to the plant with at least one lower sling (3) which seals the tubular sheet (2) against the plant (1), and with some upper fastening elements (4), so that said impermeable tubular sheet (2) forms around the treatment area, a tubular wrapping that is closed below;
- flooding the wrapped area of the plant (1) with an insecticide/fungicide (6); maintaining the insecticide/fungicide (6) in contact with the wrapped area of the plant (1) for a period of treatment greater than two hours and long enough for the liquid to penetrate the holes made by the insects in the plant and enough for elimination of said insects at any stage of their development (eggs, larva, pupae or adult).

## Description

### Object of the invention

The present invention relates to a method for treating plants against plagues, said method being particularly suitable for the treatment of woody plants, such as palm trees, against infestations by insects, fungi, etc.

### Technical field of the invention

This invention is applicable to gardening and in particular to the treatment of plants against plagues of all kinds, especially of insects and fungi.

### Background of the invention

Often plants suffer attacks from various plagues, which are generally combatted by sulphurising or spraying the plant with insecticides or fungicides.

This technique can be effective when fungi or insects attack the plants' exterior; however there are insects that burrow galleries into the plant, producing so much interior damage that it normally ends up killing it.

A typical example of such attacks is produced by the red palm weevil, popularly known as the borer, which is a kind of curculionidae beetle attacking certain woody plants, especially different types of palm trees.

To date different techniques have been applied to combat these types of insects that attack plants from the inside, without obtaining satisfactory results.

As mentioned above, one technique used consists of externally spraying plants with pesticides which do not effectively reach the bored holes in the plant, therefore an effective extermination of the plagues is prevented especially considering that in one single plant individuals in different phases or stages of development can live, as in the case of the red palm weevil eggs, larvae, pupae, or adults.

Another technique used for the treatment of these plants is to perform injections with pesticides in the plant which have a reduced effect for the same reasons stated above.

Thus the technical problem posed is the development of a method for the treatment of plants against various plagues which is effective in treating plagues which act both externally on the plant and those fungi, larvae or insects that attack the interior, producing holes and cavities such as the aforementioned red palm weevil.

### Description of the invention

To achieve that end this method, object of the present invention, has been devised for the treatment of plants against plagues, which presents some features aimed at ensuring the elimination from the plant plagues that attack the plant externally as well as those that penetrate the plant and deteriorate it internally; this method allowing for the elimination of the plague regardless of its stage or phase of development (eggs, larvae, pupae, or adults).

One goal of the method of the invention is to provide an effective contact between the insecticide/fungicide product with the eggs, larvae, adults or pupae existing in the plant, even though they are to be found in the holes or cavities produced by the larvae in the same plant.

To achieve these objects and in accordance with the present invention this method comprises the following steps:
- wrapping a treatment area of the plant with an impermeable tubular sheet; fixing said impermeable tubular sheet to the plant with at least one lower sling sealing the tubular sheet against the plant, and with some upper fastening elements, so that said impermeable sheet forms around the treatment area a tubular wrapping that is closed below;
- flooding of the area of the wrapped plant with a liquid insecticide/fungicide;
- maintaining the insecticide/fungicide liquid in contact with the wrapped area of the plant for a period of treatment of more than two hours and long enough for the liquid to penetrate the holes made by the insects in the plant and the elimination of the same at any stage of development (eggs, larva, pupae or adult).

Through this method full flooding of the cavities in the plant produced by the insects is achieved, which ensures the extinction of all types of plagues that attack the plant whether internally or externally.

According to the invention the treatment time, in which the insecticide/fungicide liquid remains in contact with the wrapped area of the plant is between 2 and 24 hours, that being considered sufficient time for the insecticide/fungicide liquid to flood the different cavities, injuries and holes in the plant and exterminate the insects living therein.

In this invention it is envisaged that, once the treatment time has elapsed, the excess insecticide/fungicide liquid may be recovered for later use on another plant, optimizing the performance of the insecticide/fungicide liquid and dramatically reducing the amount of liquid insecticide/fungicide used in the treatment of a large number of plants.

Optionally it has been envisaged that once the treatment time has passed the lower sling can be removed allowing the insecticide/fungicide liquid to run down the trunk of the plant to its roots. In this second option the consumption of insecticide/fungicide liquid is increased but it allows for a preventative treatment on the trunk and roots of the plant, which can be especially interesting in areas with a high population of insects or plagues.

### Description of figures

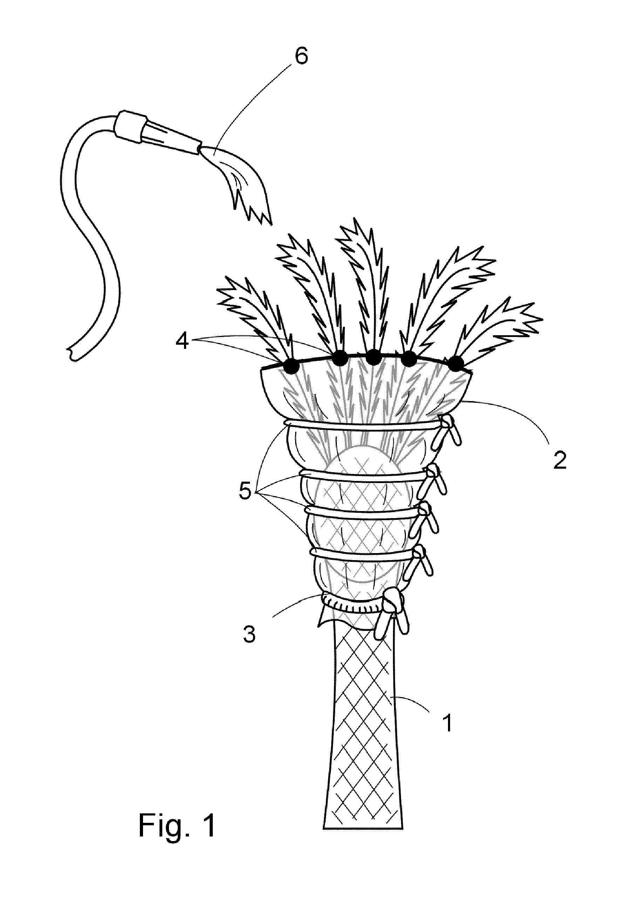

In order to complement the description that is being carried out and with the purpose of facilitating the understanding of the characteristics of the invention, the present description is accompanied by a set of drawings wherein, by way of a non-limiting example, the following has been represented:
In the embodiment of Figure 1, the method for treating plants against plagues, specifically applied to a palm tree is schematically shown.

### Preferred embodiment of the invention

As can be seen in the appended figure, the method comprises: wrapping a treatment area of the plant (1) with a tubular impermeable sheet (2) that is closed below on the plant (1) via a lower sling (3) and is fastened with some upper fastening elements (4) to the leaves of the plant. In this case the impermeable tubular sheet (2) is also held tight to the plant through intermediate slings (5), about 20 centimetres apart, forming the said impermeable tubular sheet (2) a tubular wrapping closed below by the sling (3) and open above.

Once the treatment area of the plant is wrapped with the said impermeable tubular sheet (2), a liquid (6) is poured inside the tubular wrapping formed by the sheet, which floods the area of the plant enclosed by said sheet (2).

The insecticide/fungicide liquid (6) is kept in contact with the plant during a treatment time of for example 18 hours.

Once this time has elapsed the liquid insecticide/fungicide (6) is removed for later use or the lower sling (3) is removed, so that said insecticide/fungicide liquid can run down the trunk of the plant (1) to its roots.

Once the nature of the invention as well as an example of preferred embodiment have been sufficiently described, it is stated for all pertinent purposes that the materials, form, size and arrangement of the elements described are susceptible to changes, provided these do not involve an alteration of the essential characteristics of the invention that are claimed subsequently.

## Claims

1. Method for treating plants against plagues; particularly suitable for the treatment of woody plants such as palm trees against insect plagues, fungi or the like; **characterized in that** it comprises the following steps:
- wrapping an area to be treated of the plant with an impermeable tubular sheet (2), fixing the tubular sheet (2) to the plant with at least one lower sling (3), which seals the tubular sheet (2) against the plant (1), and with upper fastening elements (4), so that said impermeable tubular sheet (2) forms around the area to be treated a tubular wrapping that is closed below;
- flooding the wrapped area of the plant (1) with an insecticide/fungicide liquid (6);
- maintaining the insecticide/fungicide liquid (6) in contact with the wrapped area of the plant (1) for a period of treatment greater than two hours and suitable for it to enter the holes made by the insects in the plant and eliminate said insects at any development stages thereof (eggs, larva, pupae or adult).

2. Method according to claim 1, **characterized in that** the period of treatment is comprised between 2 and 24 hours.

3. Method according to any one of the preceding claims, **characterized in that** it comprises, once the period of treatment has elapsed, recovering the excess insecticide/fungicide liquid (6) for later use in another plant (1).

4. Method according to any one of the preceding claims, **characterized in that** it comprises, once the period of treatment has elapsed removing the lower sling (3), allowing the insecticide/fungicide liquid to run down the trunk of the plant (1) to the roots.
